# EUROPEAN PATENT SPECIFICATION

(11) **EP 1 649 919 B1**
(45) Date of publication and mention of the grant of the patent: **21.05.2008**
(21) Application number: 05022624.0
(22) Date of filing: 18.10.2005
(51) Int. Cl.: B01D 46/24

(54) **Air filter device**
Luftfiltervorrichtung
Dispositif de filtration d'air

(30) Priority: 19.10.2004 IT BO20040643
(43) Date of publication of application: 26.04.2006
(73) Proprietor: BMC S.R.L., 40059 Medicina BO (IT)
(72) Inventor: Bergami, Gaetano, 40059 Medicina (BO) (IT)
(74) Representative: Negrini, Elena

(56) References cited:
- EP-A- 0 933 115
- US-B1- 6 638 330

## Description

The present invention refers to filters for filtering the intake air for combustion engines and refers to an air filter device.

There are known devices provided with a filtering element, for instance of paper, housed in a protection and support container.

A drawback of said know devices is that they are arranged for air aspiration in almost stationary condition, for instance inside a motor room or, in alternative, for the air adduction in dynamic condition, for instance coming from a dynamic intake of a vehicle in movement and such known devices can fulfill one or another of said functions but not both of them.

Document EP 0933115 A discloses a replaceable air filter for the air adduction in dynamic condition.

Other drawback is that the containers of the known devices arc generally made of metal or composite materials, for instance resin reinforced with carbon fiber, resulting therefore very expensive.

Further drawback of some known devices is that they have excessive air flow resistances, besides, must of the known devices have such an internal volume unable to fill the motor cylinders.

Other drawback of the known devices is that they do not allow the thermal control of the air flowing there through.

An object of the present invention is to propose a filter device for the air aspiration in static and dynamic condition.

Other object is to propose a device with low air-flow resistance and having a wide and regular internal volume.

Further object is to propose a device fit to furnish a thermal control, at least partial of the air passing there trough.

Other object of the present invention is to propose a device mechanically robust, reliable, easily fixable to motor room or installation support and cheap.

The above mentioned objects are achieved according to the claim content.

The characteristics of the invention are underlined in the following with particular reference with the attached drawing, in which:

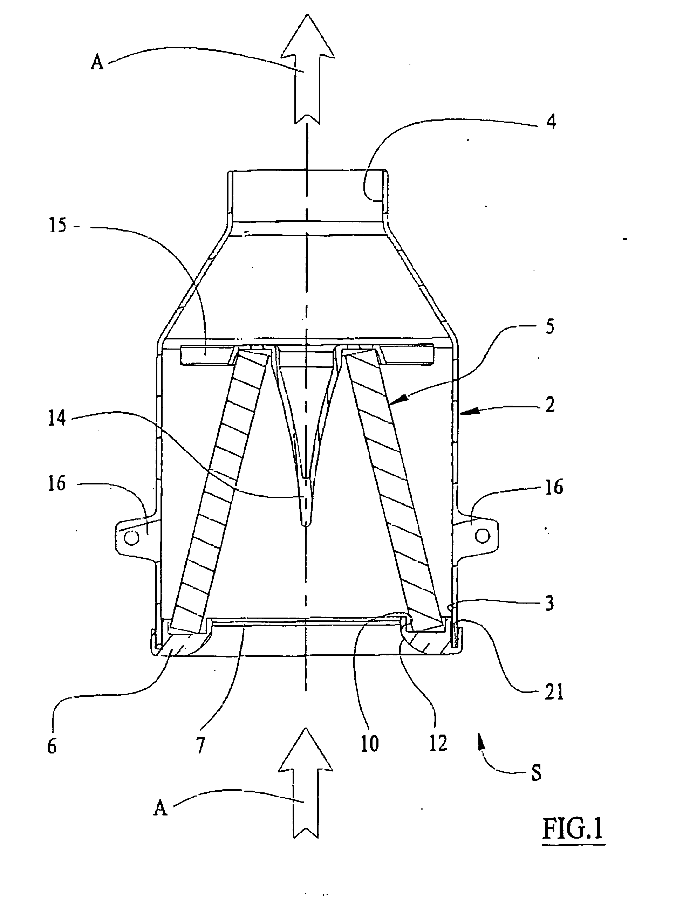

- figure 1 shows a schematic section view of the device, object of the present invention, in a configuration for the operation in static condition;

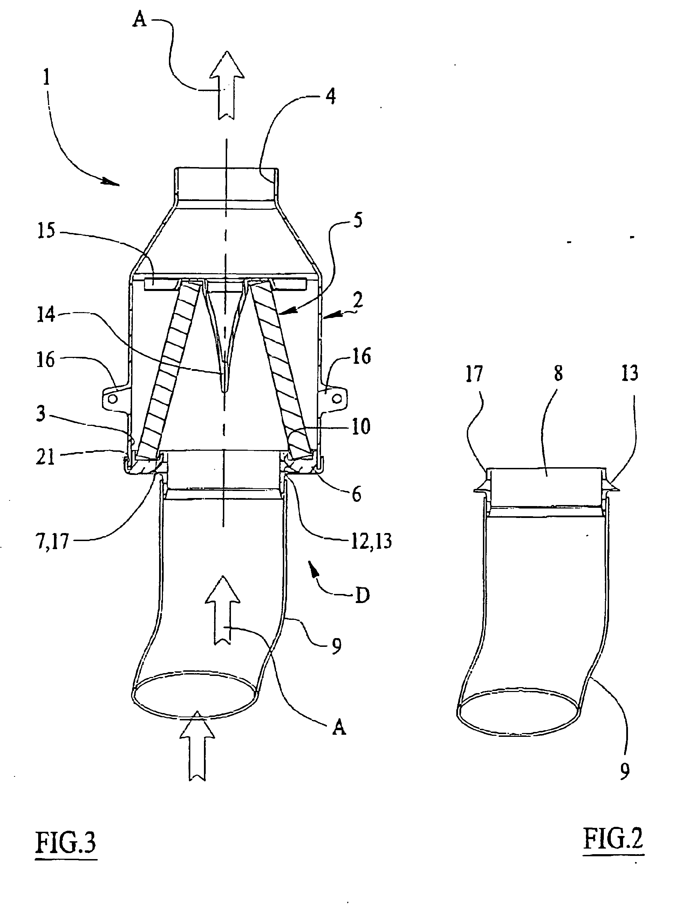

- figure 2 shows a section view of a connection mean of the device for the operation in dynamic condition associated to a connection duct for a dynamic intake;
- figure 3 shows a section view of the connection mean of figure 2 associated to the device of figure 1 to carry out a configuration of operation in dynamic condition;
- figure 4 shows a enlarged view of a particular of figure 3;
- figure 5 shows a side view of a variant of the device of figure 1.

With reference to the figures from 1 to 4, numeral 1 indicates the filter for the air aspirated by a motor or similar, object of the present invention.

The air filter device 1 includes an housing 2 provided with inlet openings and outlet openings 4 for the air A, and is fit to contain a filtering mean 5 for said air A, made of, for example, fabric or non-woven fabric or other fibers placed between two layers of thin metallic net so giving form and resistance to the filtering mean 5. The device 1 comprises furthermore a fixing mean 6 of plastic, blocked by screws to the inlet opening 3 of the housing 2 and centrally provided with a passage for the air A.

The fixing mean 6 is provided with first restrained attaching means 7 for second attaching means 17 of a connection mean 8 fit for the possible flow connection of the fixing mean 6 to a duct 9, for instance in corrugated aluminum or in plastic, for a dynamic air intake consisting in the free end of the same duct 9 or of other known and not illustrated type.

The attaching means 7, 17 can be conformed for carrying out an almost fixed and unmovable joint or of removable type for allowing the repeated connection and the disconnection of the fixing mean 6.

The inlet opening 3 is connected, by means of a respective duct of known and not illustrated type, to motor or device needing filtered air.

The ducts can be fixed to respective openings by clip pipe wrench, screws or other not illustrated similar means.

The filtering mean 5 has a cylindrical or conic form with an end fixed by glue, resin or similar, to a first groove 10 of the fixing mean 6. The end of the filtering mean 5, opposite to the fixing mean 6, has internally deflector means 14, approximately conic or with parabolic concave profile, fit to favorite the air flow through the same filtering mean 5.

The deflector means 14 are externally provided with centering and blocking arms 15, in the housing 2, of the downstream end of the air flow of the filtering mean 5 or of the opposite end to which fixed to the fixing mean.

The arms 15 are positioned on radial planes and/or can be conformed to aerodynamic flap for adjusting the course of the air flow reducing the vortical motions.

The inlet opening 3 of the housing 2 is fixed by means of lateral screws or similar to a second groove 21 of the fixing mean 6 concentric and eternal to the first groove 10.

The fixing mean 6 and the connection mean 8 are shaped as bodies of revolution and the attaching means 7, 17 are of annular form and positioned in approximately cylindrical portions, or with a small conical angle, of fixing and connection means.

The first attaching mean 7 of the fixing mean 6 consists in an annular protrusion and the second attaching mean 17 of the connection mean 8 is constituted by a annular channel almost complementary to the protrusion providing, contemporarily and unexpectedly, the mutual joint between the connection 8 and fixing means 6 and the air sealing.

The fixing mean 6 surface, having the first attaching means 7, has a flaring 12, approximately trumpet shaped, to facilitate the air incoming in the detached condition S.

The connection mean 8 portion, having second attaching means 17, has a flange 13 approximately complementary to the flaring 12 and nearly matching this latter in the jointed condition D.

The device 1 has a plurality of support means 16, external to the housing 2 and integrally made with it, consisting of flattened protrusions, radially orientated and perforated for fixing the device 1 to support structures or spaces.

The housing 2 is shaped as body of revolution, approximately of bottle shape with the truncate neck and is obtained, as integral, for molding with thermal insulating plastic material, for instance polyethylene.

Such housing shape and the connection mean shape allow to have a regular internal volume and with high cubage with respect to the housing 2 surface providing the motor with an expansion box effect improving its operation.

The device operation provides that in a detached condition S of the connection mean 8, the device 1 is arranged to receive almost steady or slight speed air, in a jointed condition D of the connection mean 8 with the fixing mean 6, the device 1 is arranged to receive air from a dynamic intake also having an incoming important speed component.

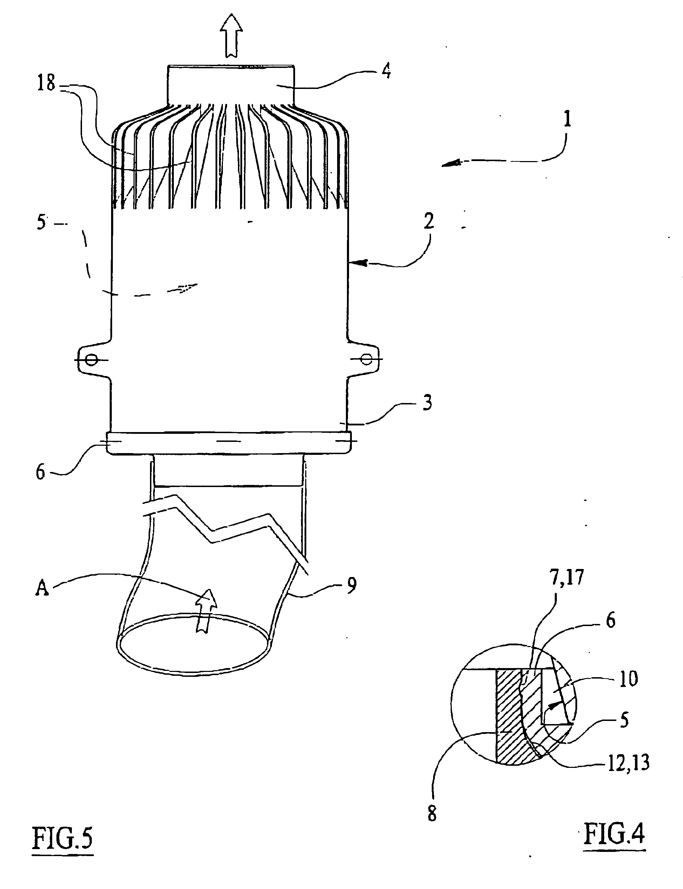

In the variant of figure 5, the bottle-neck portion of the housing 2 has a plurality of radial flaps 18 fit to increase the thermal exchange between the inside and the outside of the device 1 in order to check the temperature of the filtered air.

The flaps 18 are integral with housing 2 made of thermal conductive plastic material eventually charged with metallic or fiber particles or other fragments of good thermal conductors. In alternative the invention provides that the flaps 18 are metallic and partially incorporated in the housing 2 during its molding phase.

In order to improve thermal exchange, the flaps can optionally extend also into the housing 2 inner and eventually can be incorporated with, or replace, the arms 15 for fixing the deflector means 14 and therefore the filtering mean 5.

Said variant allows to reduce the temperature of the warmed air A, for instance due to the passage of the duct 9 close to very hot organs such as turbines or discharge collectors of the motor, simply placing the device in an environment with temperature lower than that of the warmed air A. Vice versa, placing the device in a warm environment, it is possible to heat the filtered air, for instance for the motor operation at winter.

An advantage of the present invention is to provide a filtering device for the air intake in static and dynamic condition.

Other advantage is to provide device with low resistance to the air-flow and equipped with a wide and regulate internal volume to provide the motor with an expansion box effect. Further advantage is to furnish a device providing, at least partially, a thermal control of the air passing there through.

Other advantage of the present invention is to provide a device mechanically robust, reliable, easily fixable to motor room or installation support and cheap.

## Claims

1. Air filter device comprising housing (2) provided with inlet openings (3) and outlet openings (4) for the air (A) and fit to contain a filtering means (5) of such air (A); said device (1) being **characterized in that** comprises a fixing means (6) fixed to the inlet opening (3) of the housing (2) and provided with first attaching means (7) for second attaching means (17) of a connection means (8) fit for the flow connection of the fixing means (6) to a duct (9) for a dynamic air intake; the surface of the fixing means (6) having the first attaching means (7) has a flaring (12) to facilitate the air incoming in a detached condition (S) and the portion of the connection means (8) having the second attaching means (17) has a flange (13) approximately complementary to the flaring (12) and nearly matching this latter in a jointed condition (D); one of the attaching means (7, 17) comprises at least a protrusion and the another comprises at least a channel almost complementary to the at least one protrusion; in a detached condition (S) of the connection means (8) the device (1) receives air with an incoming slight speed component, in a jointed condition (D) of the connection means(8) to the fixing means (6), the device (1) receives air from a dynamic intake also with an important speed incoming component.

2. Device according to claim 1 **characterized in that** the first attaching means (7) and the second attaching means (17) are of joint type for the mutual connection.

3. Device according to claim 1 **characterized in that** the filtering means (5) is fixed to a first groove (10) of the fixing means (6).

4. Device according to claim 1 **characterized in that** the inlet opening (3) of the housing (2) is fixed to a second groove (21) of the fixing means (6).

5. Device according to claim 1 **characterized in that** the fixing mean (6) and the connection means (8) are bodies of revolution and the attaching means (7, 17) are annular shaped.

6. Device according to claim 3 **characterized in that** the filtering means (5) has a cylindrical or conic form having the end opposite to the end fixed to the first groove (10) of the fixing means (6), internally having deflector means (14) fit to V favorite the air flow passing the same filtering means (5).

7. Device according to claim 6 **characterized in that** the deflector means (14) are externally associated to centering and blocking arms (15) in the housing (2).

8. Device according to claim 1 **characterized in that** the housing (2) has externally a plurality of support means (16) for fixing the device.

9. Device according to claim 8 **characterized in that** the support means (16) are incorporated with the housing (2).

10. Device according to claim 1 **characterized in that** the housing (2) is body of revolution shaped.

11. Device according to claim 10 **characterized in that** the housing (2) is approximately of bottle shape.

12. Device according to claim 1 **characterized in that** the housing (2) is obtained as integral by molding with plastic material.

13. Device according to claim 1 **characterized in that** the housing (2) is of thermal insulate plastic material.

14. Device according to claim 1 **characterized in that** the housing (2) is of thermal conductive plastic material.

15. Device according to claim 1 or claim 14 **characterized in that** at least a portion of the housing (2) has a plurality of flaps (18) for the thermal exchange between inside and outside of the device (1).

16. Device according to claim 15 **characterized in that** the flaps (18) are integral with the housing (2).

17. Device according to claim 15 **characterized in that** the flaps (18) are metallic and partially incorporated in the housing (2).

## Patentansprüche

1. Luftfiltervorrichtung, mit einem Gehäuse (2), das mit Einlassöffnungen (3) und Auslassöffnungen (4) für die Luft (A) versehen ist und ein Filtermittel (5) für die Luft (A) enthalten kann; wobei die Vorrichtung (1) **dadurch gekennzeichnet ist, dass** sie ein Befestigungsmittel (6) umfasst, das an der Einlassöffnung (3) des Gehäuses (2) befestigt und mit ersten Befestigungsmitteln (7) für zweite Befestigungsmittel (17) eines Verbindungsmittels (8) versehen ist, das sich zur strömenden Verbindung des Befestigungsmittels (6) mit einem Kanal (9) für einen dynamischen Lufteinlass eignet; wobei die Oberfläche des Befestigungsmittels (6) mit den ersten Befestigungsmitteln (7) eine Aufweitung (12) besitzt, um im gelösten Zustand (S) die Luft leichter einströmen zu lassen, und der Abschnitt des Verbindungsmittels (8) mit den zweiten Befestigungsmitteln (17) einen Flansch (13) aufweist, der annähernd komplementär zu der Aufweitung (12) ist und in angeschlossenem Zustand (D) dieser letzteren fast entspricht; wobei das eine von den Befestigungsmitteln (7, 17) wenigstens einen Vorsprung umfasst; und das andere wenigstens eine Vertiefung umfasst, die zu dem wenigstens einen Vorsprung fast komplementär ist; und die Vorrichtung (1) im gelösten Zustand (S) des Verbindungsmittels (8) die Luft mit einer leichten Eintrittsgeschwindigkeitskomponente aufnimmt und die Vorrichtung (1) im Anschlusszustand (D) des Verbindungsmittels (8) an den Befestigungsmittel (6) Luft aus einem dynamischen Einlass ebenfalls mit einer wichtigen Eintrittsgeschwindigkeitskomponente aufnimmt.

2. Vorrichtung nach Anspruch 1, **dadurch gekennzeichnet, dass** die ersten Befestigungsmittel (7) und die zweiten Befestigungsmittel (17) Anschlussmittel zur gegenseitigen Verbindung sind.

3. Vorrichtung nach Anspruch 1, **dadurch gekennzeichnet, dass** das Filtermittel (5) in einer ersten Nut (10) der Befestigungsmittel (6) befestigt ist.

4. Vorrichtung nach Anspruch 1, **dadurch gekennzeichnet, dass** die Einlassöffnung (3) des Gehäuses (2) in einer zweiten Nut (21) der Befestigungsmittel (6) befestigt ist.

5. Vorrichtung nach Anspruch 1, **dadurch gekennzeichnet, dass** das Befestigungsmittel (6) und das Verbindungsmittel 8 Rotationskörper sind und die Befestigungsmittel (7, 17) ringförmig sind.

6. Vorrichtung nach Anspruch 3, **dadurch gekennzeichnet, dass** das Filtermittel (5) eine zylindrische oder konische Form aufweist, deren Ende dem in der ersten Nut (10) des Befestigungsmittels (6) befestigten Ende gegenüberliegt, und das innen Ablenkmittel (14) aufweist, welche den dieses Filtermittel (5) durchlaufenden Luftstrom begünstigen können.

7. Vorrichtung nach Anspruch 6, **dadurch gekennzeichnet, dass** die Ablenkmittel (14) außen Zentrier- und Sperrarmen (15) in dem Gehäuse (2) zugeordnet sind.

8. Vorrichtung nach Anspruch 1, **dadurch gekennzeichnet, dass** das Gehäuse (2) außen mehrere Tragmittel (16) zum Befestigen der Vorrichtung aufweist.

9. Vorrichtung nach Anspruch 8, **dadurch gekennzeichnet, dass** die Tragmittel (16) in das Gehäuse (2) eingebaut sind.

10. Vorrichtung nach Anspruch 1, **dadurch gekennzeichnet, dass** das Gehäuse (2) rotationskörperförrrig ist.

11. Vorrichtung nach Anspruch 10, **dadurch gekennzeichnet, dass** das Gehäuse (2) annähernd flaschenförmig ist.

12. Vorrichtung nach Anspruch 10, **dadurch gekennzeichnet, dass** man das Gehäuse (2) durch Formen mit Kunststoff einstückig erhält.

13. Vorrichtung nach Anspruch 1, **dadurch gekennzeichnet, dass** das Gehäuse (2) aus wärmeisoliertem Kunststoff besteht.

14. Vorrichtung nach Anspruch 1, **dadurch gekennzeichnet, dass** das Gehäuse (2) aus wärmeleitendem Kunststoff besteht.

15. Vorrichtung nach Anspruch 1 oder Anspruch 14, **dadurch gekennzeichnet, dass** wenigstens ein Abschnitt des Gehäuses (2) mehrere Klappen (18) zum Wärmeaustausch zwischen der Innenseite und der Außenseite der Vorrichtung (1) aufweist.

16. Vorrichtung nach Anspruch 15, **dadurch gekennzeichnet, dass** die Klappen (18) mit dem Gehäuse (2) einstückig sind.

17. Vorrichtung nach Anspruch 15, **dadurch gekennzeichnet, dass** die Klappen (18) aus Metall und zum Teil in das Gehäuse (2) eingebaut sind.

## Revendications

1. Dispositif de filtration d'air comprenant un corps (2) doté d'ouvertures d'entrée (3) et d'ouvertures de sortie (4) de l'air (A) et ajusté pour contenir un moyen de filtrage (5) d'un tel air (A) ; ledit dispositif (1) étant **caractérisé en ce qu'**il comprend un moyen de fixation (6) fixé à l'ouverture d'entrée (3) du corps (2) et doté d'un premier moyen de fixation (7) un second moyen de fixation (17) d'un moyen de raccordement (8) ajusté pour le raccordement du flux du moyen de fixation (6) à un conduit (9) pour permettre une entrée d'air dynamique ; la surface du moyen de fixation (6) ayant le premier moyen de fixation (7) présente un évasement (12) pour faciliter l'entrée de l'air dans une condition détachée (S) et la partie du moyen de raccordement (8) ayant le second moyen de fixation (17) présente une bride (13) approximativement complémentaire de l'évasement (12) et se conformant quasiment à ce dernier dans une condition jointe (D) ; l'un des moyens de fixation (7, 17) comprend au moins une saillie et l'autre comprend au moins un canal presque complémentaire de l'au moins une saillie; dans une condition détachée (S) du moyen de raccordement (8), le dispositif (1) reçoit l'air avec une composante entrante de vitesse faible, dans une condition jointe (D) du moyen de raccordement (8) au moyen de fixation (6), le dispositif (1) reçoit l'air à partir d'une entrée dynamique également avec une composante entrante de vitesse importante.

2. Dispositif selon la revendication 1, **caractérisée en ce que** le premier moyen de fixation (7) et le second moyen de fixation (17) sont d'un type joint pour le raccordement mutuel.

3. Dispositif selon la revendication 1, **caractérisée en ce que** le moyen de filtrage (5) est fixé à une première rainure (10) du moyen de fixation (6).

4. Dispositif selon la revendication 1, **caractérisé en ce que** l'ouverture d'entrée (3) du corps (2) est fixée à une seconde rainure (21) du moyen de fixation (6).

5. Dispositif selon la revendication 1, **caractérisé en ce que** le moyen de fixation (6) et le moyen de raccordement (8) sont des solides de révolution et **en ce que** les moyens de fixation (7, 17) présentent une forme annulaire.

6. Dispositif selon la revendication 3, **caractérisé en ce que** le moyen de filtrage (5) présente une forme cylindrique ou conique ayant l'extrémité opposée à l'extrémité fixée à la première rainure (10) du moyen de fixation (6), ayant intérieurement un moyen formant déflecteur (14) ajusté pour favoriser le passage du flux d'air à travers le même moyen de filtrage (5).

7. Dispositif selon la revendication 6, **caractérisé en ce que** le moyen formant déflecteur (14) est associé extérieurement à des bras de centrage et de blocage (15) dans le corps (2).

8. Dispositif selon la revendication 1, **caractérisé en ce que** le corps (2) présente extérieurement une pluralité de moyens de support (16) pour fixer le dispositif.

9. Dispositif selon la revendication 8, **caractérisé en ce que** les moyens de support (16) sont incorporés avec le corps (2).

10. Dispositif selon la revendication 1, **caractérisé en ce que** le corps (2) est un solide de révolution mis en forme.

11. Dispositif selon la revendication 10, **caractérisé en ce que** le corps (2) présente approximativement une forme de bouteille.

12. Dispositif selon la revendication 1, **caractérisé en ce que** le corps (2) est obtenu d'une pièce en moulant un matériau de matière plastique.

13. Dispositif selon la revendication 1, **caractérisé en ce que** le corps (2) est réalisé dans un matériau de matière plastique qui est un isolant thermique.

14. Dispositif selon la revendication 1, **caractérisé en ce que** le corps (2) est réalisé dans un matériau de matière plastique qui est un conducteur thermique.

15. Dispositif selon la revendication 1 ou la revendication 14, **caractérisé en ce qu'**au moins une partie du corps (2) présente une pluralité de volets (18) pour assurer l'échange thermique entre 1'intérieur et l'extérieur du dispositif (1).

16. Dispositif selon la revendication 15, **caractérisé en ce que** les volets (18) sont d'une pièce avec le corps (2).

17. Dispositif selon la revendication 15, **caractérisé en ce que** les volets (18) sont métalliques et incorporés en partie dans le corps (2).
